# EUROPEAN PATENT SPECIFICATION

(11) **EP 2 456 604 B1**
(45) Date of publication and mention of the grant of the patent: **09.11.2016**
(21) Application number: 09786711.3
(22) Date of filing: 24.07.2009
(51) Int. Cl.: B29C 45/16, H04R 1/02

(54) **TWO-COLOR OR MULTICOLOR ILLUMINATED LOUDSPEAKER GRILLE FOR VEHICLES**
ZWEIFARBIGE ODER MEHRFARBIGE BELEUCHTETE LAUTSPRECHERGITTER FÜR FAHRZEUGE
GRILLE DE HAUT-PARLEUR ÉCLAIRÉE BICOLORE OU MULTICOLORE POUR VÉHICULES

(43) Date of publication of application: 30.05.2012
(73) Proprietor: La Precisione Officine Meccaniche Snc, 35017 Piombino Dese (PD) (IT)
(72) Inventor: FERLIN, Valter, I-35017 Piombino Dese (PD) (IT); FERLIN, Mirco, I-35017 Piombino Dese (PD) (IT)
(74) Representative: Vinci, Marcello
(86) International application number: PCT/IB2009/053247
(87) International publication number: WO 2011/010187

(56) References cited:
- EP-A1- 0 884 155
- WO-A1-97/45829
- DE-A1- 2 717 644
- DE-A1- 4 104 481
- DE-A1- 10 233 447
- DE-A1- 10 235 642
- DE-A1-102004 037 361
- DE-A1-102007 041 702
- DE-A1-102008 044 357
- DE-U1-202006 015 232
- US-A1- 2004 124 558
- US-B1- 6 196 822

## Description

The present patent relates to grilles for covering and protecting loudspeakers, air grilles and simple decorative grilles and in particular concerns new grilles for covering and protecting loudspeakers obtained in two or more colours, with or without lighting, either single or integrated in the door panel or rear shelf, obtained in one single piece.

In the automobile sector in particular, the loudspeakers are covered mainly to protect them from accidental knocks, consequently a rigid cover provided with a plurality of holes is widely used.

The rigid grilles for loudspeakers have the chief function of protecting the loudspeakers, mainly from knocks, and must allow for diffusion of the sound emitted by the loudspeakers.

For said purpose the loudspeaker grilles consist of a layer of plastic material provided with a plurality of adjacent small holes.

The rigid protection grilles for loudspeakers can be independent elements, such as the grilles applied to cover the holes made in the rear shelf of motor vehicles or in the door panels, or they can be part of the loudspeaker support, as in the case of loudspeakers added and fixed above the rear shelf of motor vehicles, or they can be part of a more extensive and multipurpose structure, such as the interior panels of car doors.

Loudspeaker grilles are currently produced in one single type of plastic in one single colour.

Loudspeaker grilles are usually made of plastic which can be in various colours. To obtain grilles with coloured rims, a second mould is constructed suitable for producing the rim which is then snap-connected, either by means of metal clips or clips obtained on the rim itself, or fixed by means of ultrasound welding or glue or simply screw-fitted to the grille or door panel or rear shelf. Said solution involves the serious risk of parts of the grille becoming detached in the event of impact and constituting a hazard for the passengers, especially if some of said parts are metal or in any case rigid.

E.g. DE 10 2004 037 361 relates to such a method for producing a moulded cover 1 for loud speakers with a grid structure 2 by injecting a mixture of polyamide (PA) and acrylic butadiene styrene (ABS).

DE 20 2006 015 232 U relates to a loudspeaker frame structure also having a central grid structure in plastic or metallic material that is separately realized, painted to prevent the passage of light through unwanted areas, and then assembled with the other parts.

The present patent concerns new grilles especially for loudspeakers, also forming part of a door panel, made of two or more materials, in two or more colours or two or more opacities or transparencies obtained with one single mould and therefore in one single co-injected piece.

One of the objects of the present patent is to provide single-piece grilles in two or more colours or materials.

A further object of the present patent is to obtain single-piece grilles without the use of glues or processes for joining two pieces produced separately.

A further object of the present patent is to provide grilles with rims or logos, or door panels or rear shelves with grilles with integral coloured rim via the use of one single mould and not various moulds, with consequent reduction in times, costs and materials used.

A further object of the present patent is to provide grilles for loudspeakers with transparent or translucent or simply coloured portions.

These and further objects, direct and complementary, are achieved by the new grilles for loudspeakers in two or more materials of two or more colours or two or more materials, either single or integrated with the part where they are fitted (e.g. door panel - rear shelf etc. etc.).

The new grilles comprise an outer part, an intermediate part or frame if necessary, and a perforated part.

Said outer part is made of solid plastic material, substantially without holes, suitable for permitting application or fixing of the grille and if necessary moulding in one single piece together with the grille part. Said outer part can constitute the only outer part fixing the grille to the panel on which the loudspeaker is fixed, or it can constitute the front part of a loudspeaker unit, or the interior panel of a car door.

The perforated part, suitable for being positioned at the front of the loudspeaker, is made of the same material, partly or entirely, or of a plastic material different from the plastic constituting said outer part.

Said perforated part can be made of uniform plastic material of different colour with respect to said outer part. In said case the perforated part has a visual and/or chromatic aspect different from said outer part and from the intermediate part.

Said perforated part can be made of uniform transparent or translucent or simply coloured plastic material. In said case it is possible to position one or more light sources at the rear of the new grille, and therefore light both the perforated area and the area with rims or logos of different or the same colour which allows passage of the light. Said light sources can be monochromatic or selectable polychromatic. Appropriate light regulators or light source selection regulators allow for modification of the light intensity and/or the chromatic shade of the light crossing said above-mentioned part. The light source can also be connected to switch-on of the hi-fi system and if necessary produce a combined effect with the sounds and the music.

Said perforated part can be non-uniform or comprising in turn one or more opaque parts and one or more transparent or translucent or different coloured parts. In said case, for example, the perforated part can be made of transparent and/or translucent plastic or be in a certain colour with a central part, perforated or non-perforated, made of plastic of a different colour; or said perforated part can consist of a translucent part of one colour having in the centre a translucent part of another colour; or said perforated part can consist of a part made of transparent plastic of a certain colour and/or translucent having two or more parts made of opaque and/or transparent and/or translucent or different coloured material.

Said intermediate part or frame surrounding said perforated part is preferably made of plastic material which is transparent and/or translucent or simply of a different colour.

When the lighting is used, the grille can have the colours of the parts that permit passage of the light or which are transparent and/or translucent or obtained by producing said transparent and/or translucent parts in Plexiglas or other plastic material lit by one single light source or by the various lighting methods known today or developed in the future.

It is also possible for the parts to be lit from the outside or back of the grille inserting the light source between support (e.g. rear shelf) and grille outer rim with coloured or non-coloured rim with any one of the light sources known today or developed in the future.

Said grille in two or more colours is made in one single piece which is obtained by means of two or more separate injections in the same composite mould.

To obtain said perforated grille with relative frame or logo of different colour or outer support integrated with respect to the grille, a new and original production method must be used which consists in a special injection unit and a mould which permits correct use of said technique.

To inject the coloured rim, single injectors or several injectors could be used according to requirements, with direct or external injections, therefore submerged injections of the hook or tunnel type.

In order to inject this type of part, a new type of hot chamber is required.

The new hot chamber will consist of a feed unit which can be shut off or diverted, thus the flow of material can be shut off and prevented or diverted to other cavities if the mould is required to produce pieces every time it is opened, thus permitting alternate injection of coloured and non-coloured plastic material.

This injection unit will be used as it allows for shutting off or diversion of the flow of plastic material without having to operate directly on the tip of the nozzle, since very large spaces are required to operate at these points; furthermore, many nozzles are used to mould the grilles and this would make the injection system excessively costly, resulting in said production technique being no longer competitive. It should also be remembered that the grilles are injected from the back, the injection of the part is on the same side as the ejection and therefore the plastic part, of the first and various other materials or colours, always remains stationary and in contact with the injection points while the dies rotate, alternating grille impression and rim impression, which would not be possible with any other chamber with known sequential feed, because between the injection of one material and another, the press is opened, thus resetting the control unit sequence and eliminating the possibility of alternating the various materials to be moulded. Due to the possibility of diverting or shutting off the flow of material in the feed channel, alternating moulding of the two colours from one cavity to the other of the parts, finished pieces can be produced every time the die is opened with considerable saving in time compared to a traditional injection unit.

To produce, for example, a r.h. element + a l.h. element we can use a rotational mould which has four equal punches mounted on the fixed part of the press all complete with their own injection system and four dies, two of which are used to obtain the central part of the grille with the mesh, while the other two serve to obtain the rim or logo or any other element required on the grille in a different colour or material. The rotational moulding technique has been described but obviously any of the techniques known today for the moulding of parts with different materials can be used.

Therefore, for example, when we wish to mould the grille on the two lower mould cavities which can be identical or r.h. + l.h., the two upper cavities suitable for moulding the same material will have the nozzle unit shut off and therefore only the feed channels of the second injection unit used for the coloured or different material will be open.

We therefore have a combination of coloured and non-coloured injectors which alternate in sequence during moulding, hence the injection cycle of the body part and the coloured part can be alternated. The example refers to two colours but more than two colours or materials can be moulded according to the same concept.

The mould rotation cycle changes because with two colours the mould is rotated 180°, with three colours it is rotated 360/3 i.e. 120° and so on for 4 or more colours and materials.

Opening and rotation of the mould is necessary to align in this case the cavity with the space to be filled with the different or coloured material without re-compressing the previously moulded material apart from a very thin rim which delimits the two or more different or coloured materials. It is therefore clear that where the material is not compressed, an empty space is left and if a shut-off or flow diverter feed unit were not used, it would not be possible to alternate injection of the material which would therefore fill these empty spaces, ruining the part produced.

With the new system described above it is now possible to adopt various colour shades to initiate a process of visual and sensorial chromotherapy with the car switched off, obviously in the evening, allowing the user to relax, combining a new combined chromatic effect with the music and the sound that comes out of the loudspeaker units.

The accompanying drawings show, by way of non-limiting example, a practical embodiment of the invention.

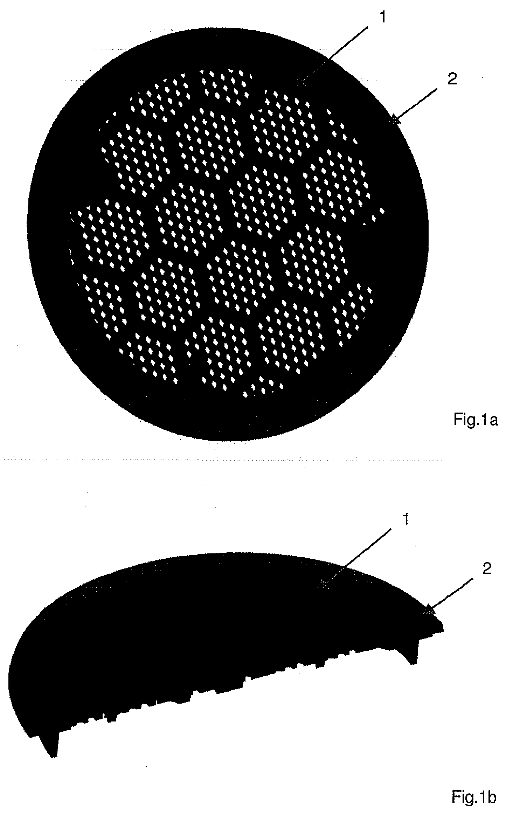

Figures 1a and 1b show a grille comprising a perforated central part (1) and a co-injected rim (2) in a different colour and/or material, integral with said first central part (1).

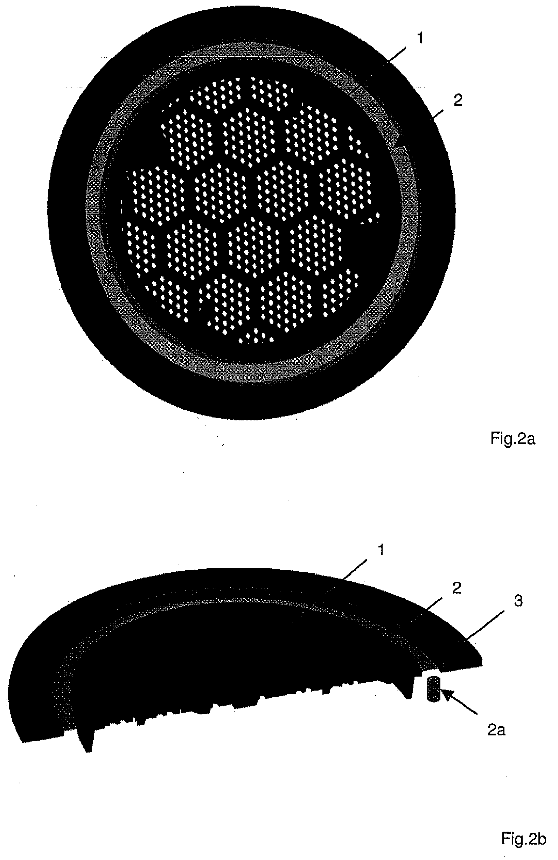

Figures 2a and 2b show a grille comprising a perforated central part (1), a semi-transparent co-injected frame (2) of colour and/or material different from the first part (1) and backlit by LEDs (2a) or optic fibres, and a further outer frame (3) made of the same material as the first part (1).

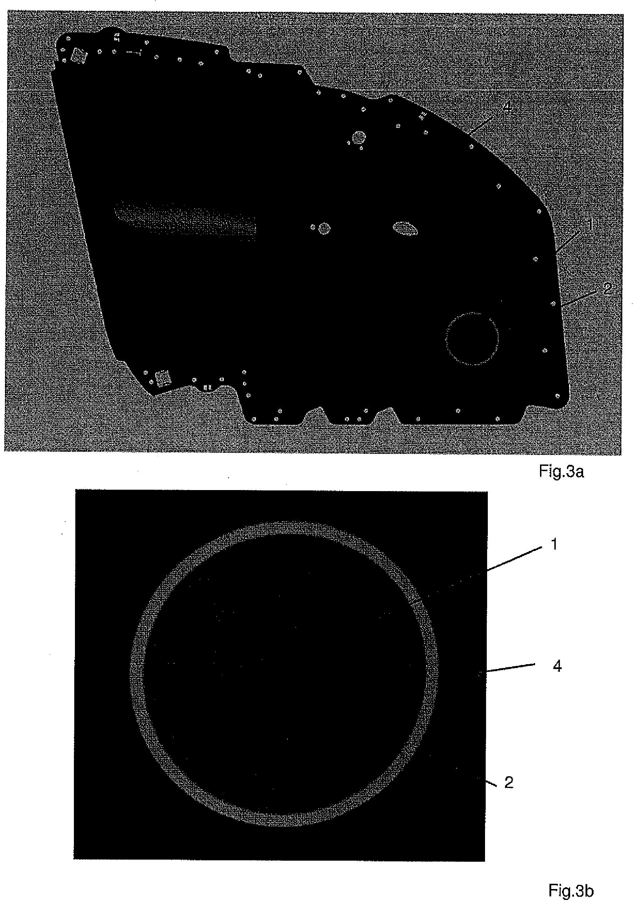

Figure 3a shows a door panel (4) provided with a grille part (1) (detail 3b) surrounded by a second co-injected part (2) of different colour and/or material.

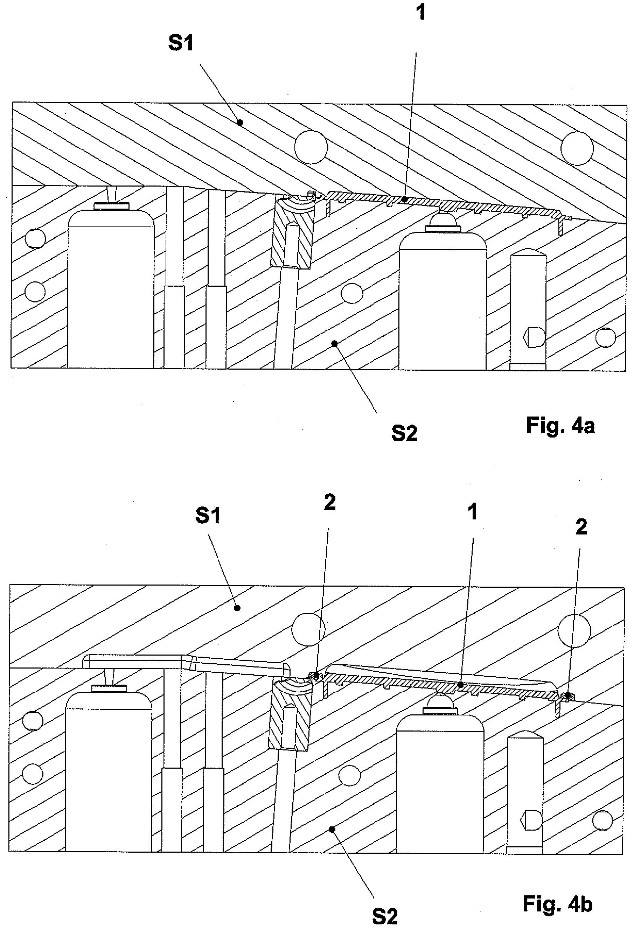

Figures 4a and 4b show a detail of the mould (S1, S2) with the main phases of production of the grille (1) provided with outer ring (2) of different colour and/or material.

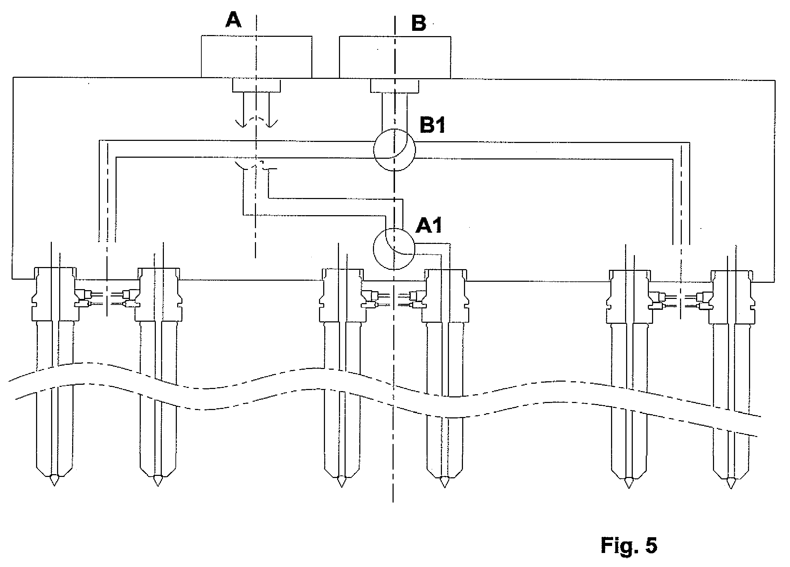

Figure 5 shows the injection unit for two materials (A, B) with relative diverter valves (A1, B1) to the relative injectors.

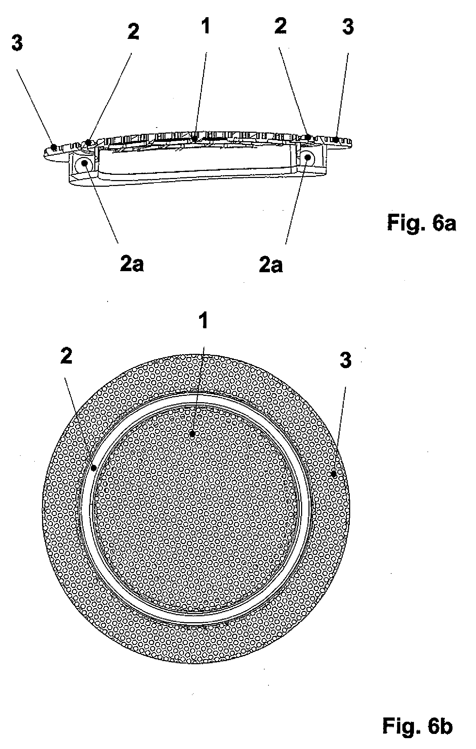

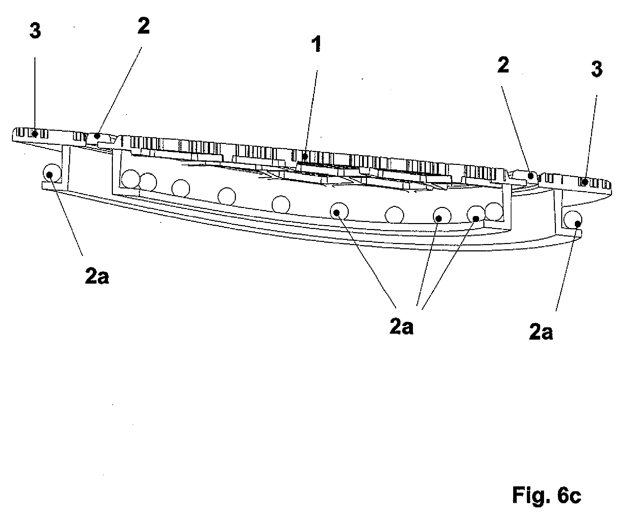

Figure 6a, the detail of figure 6b and figure 6c illustrate another embodiment of the new grille with first perforated central part (1) and second circular part (2) made of different material and/or in a different colour provided with LEDs (2a) for lighting.

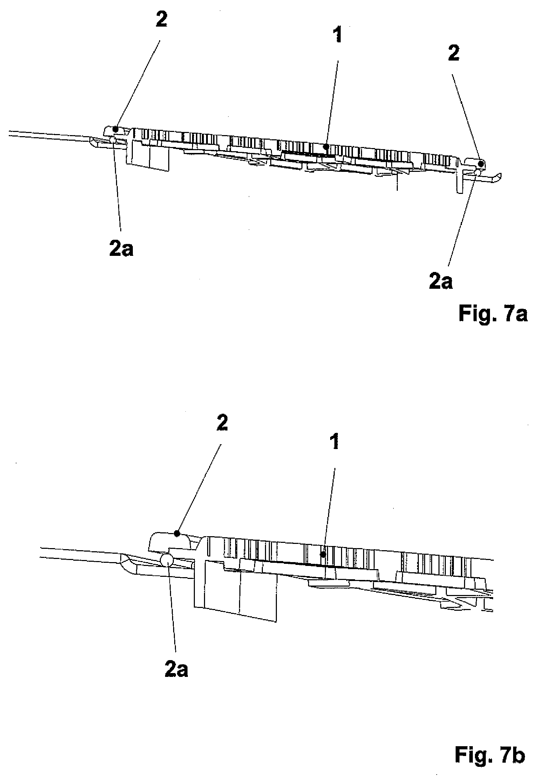

Figures 7a and 7b illustrate another embodiment of the new grille with first perforated central part (1) and second circular part (2) made of different material and/or in a different colour provided with LEDs (2a) for lighting.

Therefore with reference to the preceding description and the accompanying drawings the following claims are made.

## Claims

1. Device for the production of plastic grille for vehicles made in one single piece, **characterised in that** it comprises:
• at least a feed unit, of the shut-off or diverter type, for shutting off the flow of material or diverting it to other cavities, which allows complete parts with two or more components to be obtained every time the mould is opened;
• an injection unit suitable for shutting off or diverting the flow of plastic material by means of a two- or multi-way valve without operating directly on the tip of the nozzle;
• a rotational mould comprising four identical punches mounted on the fixed part of the press all complete with their own injection system and four dies, two of which to obtain the central part of the grille with the mesh and the other two to obtain the rim or logo or any other element desired on the grille of different colour or material
and wherein the injection of the part is on the same side as the ejection and therefore the plastic part always remains stationary and in contact with the injection points,
and wherein the device comprises a combination of injectors which alternate in sequence during moulding.

2. Device for the production of grilles as claimed in the preceding claim, **characterised in that** it comprises the 180° rotation cycle of the mould for two colours and/or materials, 120° for three colours and/or materials, 90° for four colours and/or materials, without limitation to said technique.

3. Plastic grille for vehicles made in one single piece by said device as in the preceding claims, **characterised in that** it comprises at least two co-injected parts (1, 2) of two or more colours and/or different materials, obtained by means of two or more separate injections in the same composite mould, a first part (1) being made of a plastic material, and at least a second part (2, 3) integral with said first part (1) being made in a different material and/or in a different colour, wherein at least one of said co-injected parts (1, 2) is wholly or partly made of different transparent, translucent or semi-translucent material or of different colour, said grille also comprising lighting devices (2a) positioned in combination with said coloured or non-coloured parts (1,2) which permit at least partial passage of the light when they are directly or indirectly lit.

4. Method for production of plastic grilles for vehicles, **characterised in that** using said device as claimed in the preceding claim, it comprises a phase of injection of the plastic material forming the perforated area and another phase of injection of the plastic material of another colour and/or of another component.

5. Method for the production of grilles, as claimed in the preceding claims, **characterised in that** it comprises injection in the same mould (S1, S2) of both the r.h. and l.h. grille, both for the phase of injection of the plastic material forming the perforated area (1) and for the other phase of injection of the plastic material (2) of another colour and/or of another component, producing complete parts every time the mould is opened.

## Patentansprüche

1. Vorrichtung für die Produktion von aus einem Stück gefertigtem Kunststoffgitter für Fahrzeuge, **dadurch gekennzeichnet, dass** sie Folgendes umfasst:
• wenigstens eine Zuführeinheit des Absperr- oder Umleittyps zum Absperren des Materialflusses oder zu seiner Umleitung zu anderen Hohlräumen, die es erlaubt, bei jeder Öffnung des Formwerkzeugs komplette Teile aus zwei oder mehreren Bestandteilen zu erhalten;
• eine Einspritzeinheit, dazu geeignet, den Kunststofffluss über ein Zwei- oder Mehrwegeventil abzusperren oder umzuleiten, ohne direkt die Düsenspitze zu betätigen;
• ein Rotationsformwerkzeug, das vier identische, am feststehenden Teil der Presse montierte Stempel umfasst, die komplett mit ihren eigenen Einspritzsystemen sind, und vier Matrizen, davon zwei zur Erzielung des mittleren Teils des Gitters mit den Maschen, und die anderen zwei zur Erzielung des Rands oder Logos oder jeglichen anderen, gewünschten Elements auf dem Gitter in einer anderen Farbe oder aus einem anderen Werkstoff,
und wobei das Spritzen des Teils an derselben Seite erfolgt wie der Auswurf, und das Kunststoffteil daher stets stationär und in Kontakt mit den Einspritzpunkten bleibt,
und wobei die Vorrichtung eine Kombination aus Einspritzdüsen umfasst, die sich während des Formens in Folge abwechseln.

2. Vorrichtung für die Produktion von Gittern gemäß vorstehenden Patentanspruchs, **dadurch gekennzeichnet, dass** sie den 180°-Drehzyklus des Formwerkzeugs für zwei Farben und/oder Werkstoffe umfasst, 120° für drei Farben und/oder Werkstoffe, 90° für vier Farben und/oder Werkstoffe, ohne dass der besagten Technik Grenzen gesetzt sind.

3. Kunststoffgitter für Fahrzeuge, mit der besagten Vorrichtung gemäß vorstehenden Patentansprüchen aus einem Stück gefertigt, **dadurch gekennzeichnet, dass** es wenigstens zwei gleichzeitig gespritzte Teile (1, 2) aus zwei oder mehreren Farben und/oder unterschiedlichen Werkstoffen umfasst, die durch zwei oder mehrere, separate Einspritzungen in dasselbe Verbundformwerkzeug erzielt werden, wobei ein erster Teil (1) aus einem Kunststoff gefertigt ist, und wenigstens ein zweiter, mit dem besagten ersten Teil (1) eine Einheit bildender Teil (2, 3) aus einem anderen Werkstoff und/oder in einer anderen Farbe gefertigt ist, wobei wenigstens eines der besagten, gleichzeitig gespritzten Teile (1, 2) vollständig oder teilweise aus einem unterschiedlichen transparenten, durchscheinenden oder halb-durchscheinenden Werkstoff bzw. in einer anderen Farbe gefertigt ist, wobei das besagte Gitter auch Beleuchtungsvorrichtungen (2a) umfasst, die in Kombination mit den besagten farbigen oder farblosen Teilen (1, 2) positioniert sind, welche den wenigstens teilweisen Durchgang des Lichts erlauben, wenn sie direkt oder indirekt beleuchtet werden.

4. Verfahren für die Herstellung von Kunststoffgittern für Fahrzeuge, **dadurch gekennzeichnet, dass** der Gebrauch der besagten Vorrichtung gemäß vorstehendem Patentanspruch eine Phase der Einspritzung des Kunststoffs umfasst, welcher den gelochten Bereich bildet, und eine andere Phase der Einspritzung des Kunststoffs einer anderen Farbe und/oder einer anderen Komponente.

5. Verfahren für die Herstellung von Kunststoffgittern für Fahrzeuge gemäß vorstehenden Patentansprüchen, **dadurch gekennzeichnet, dass** es die Einspritzung des rechten und des linken Gitters in dasselbe Formwerkzeug (S1, S2) umfasst, sowohl für die Einspritzphase des Kunststoffs, der den gelochten Bereich (1) bildet, als auch für die andere Einspritzphase des Kunststoffs (2) in einer anderen Farbe und/oder einer anderen Komponente, so dass bei jedem Öffnen des Formwerkzeugs komplette Teile produziert werden.

## Revendications

1. Dispositif pour la production de grille en plastique pour véhicules réalisée en une pièce unique, **caractérisé en ce qu**'il comprend :
• au moins une unité d'alimentation, du type d'arrêt ou déflecteur, pour arrêter le flux de matériau ou pour le dévier vers d'autres cavités, qui permet de réaliser des pièces complètes avec deux ou plusieurs composants à obtenir chaque fois que le moule est ouvert ;
• une unité d'injection apte à arrêter ou dévier le flux de matériau plastique au moyen d'une soupape à deux voies ou à plusieurs voies sans manoeuvrer directement sur l'extrémité de l'embout ;
• un moule rotatif comprenant quatre poinçons identiques montés sur la partie fixe de la presse tous dotés de leur système d'injection et de quatre matrices, deux desquelles pour obtenir la partie centrale de la grille avec la maille et les deux autres pour obtenir le bord ou logo ou tout autre élément souhaité sur la grille de couleur ou matériau différent
et où l'injection de la partie se vérifie sur le même côté de l'éjection et, par conséquent, la partie en plastique reste toujours fixe et en contact avec les points d'injection,
et où le dispositif comprend une combinaison d'injecteurs qui s'alternent en séquence durant le moulage.

2. Dispositif pour la production de grilles selon la revendication précédente, **caractérisé en ce qu**'il comprend le cycle de rotation de 180° du moule pour deux couleurs et/ou matériaux, de 120° pour trois couleurs et/ou matériaux, de 90° pour quatre couleurs et/ou matériaux, sans limitation à ladite technique.

3. Grille en plastique pour véhicules réalisée en une pièce unique au moyen dudit dispositif selon les revendications précédentes, **caractérisée en ce qu'**elle comprend au moins deux pièces co-injectées (1, 2) de deux ou plusieurs couleurs et/ou différents matériaux, obtenues au moyen de deux ou plusieurs injections séparées dans le même moule composite, une première partie (1) étant réalisée en un matériau plastique et au moins une deuxième partie (2, 3) solidaire de ladite première partie (1) étant réalisée en un matériau différent et/ou dans une couleur différente, où au moins une desdites parties co-injectées (1, 2) est entièrement ou partiellement réalisée en matériau transparent, translucide ou semi-translucide différent ou en couleur différente, ladite grille comprenant en outre des dispositifs d'éclairage (2a) disposés en combinaison avec lesdites parties colorées ou non colorées (1, 2) qui permettent au moins un passage partiel de la lumière quand elles sont directement ou indirectement allumées.

4. Méthode pour la production de grilles en plastique pour véhicules, **caractérisée en ce que,** en utilisant ledit dispositif selon la revendication précédente, elle comprend une phase d'injection du matériau plastique formant la zone perforée et une autre phase d'injection du matériau plastique d'une autre couleur et/ou d'un autre composant.

5. Méthode pour la production de grilles, selon les revendications précédentes, **caractérisée en ce qu**'elle comprend l'injection dans le même moule (S1, S2) aussi bien de la grille de droite que de celle de gauche, et cela aussi bien pour la phase d'injection du matériau plastique formant la zone perforée (1) que pour l'autre phase d'injection du matériau plastique (2) d'une autre couleur et/ou d'un autre composant, en produisant des pièces complètes chaque fois que le moule est ouvert.
